# EUROPÄISCHE PATENTANMELDUNG

(11) **EP 1 008 494 A2**
(43) Veröffentlichungstag der Anmeldung: **14.06.2000**
(21) Anmeldenummer: 99123960.9
(22) Anmeldetag: 06.12.1999
(51) Int. Cl.: B60R 21/16, B60R 21/26

(54) **Gassack-Seitenaufprall-Schutzeinrichtung**

(30) Priorität: 11.12.1998 DE 29822159 U
(71) Anmelder: TRW Occupant Restraint Systems GmbH & Co. KG, 73553 Alfdorf (DE)
(72) Erfinder: Acker, Dominique, 73553 Alfdorf (DE); Hirth, Jürgen, 74417 Gschwend (DE); Mundal, Stein Helge, 73557 Mutlangen (DE); Oheim, Hendrik, 10437 Berlin (DE)
(74) Vertreter: Sties, Jochen, Dipl.-Ing.

(57) **Zusammenfassung**

Eine Gassack-Seitenaufprall-Schutzeinrichtung für Fahrzeuginsassen, mit einer Druckgasquelle (16) und einem aufblasbaren Gassack (18), wobei der Gassack (18) eine erste, seitlich des Brustkorbs eines Insassen aufblasbare Kammer (20) und eine zweite aufblasbare Kammer (22) aufweist, ist dadurch gekennzeichnet, daß die zweite Kammer (22) seitlich des Beckens des Insassen aufblasbar ist und die Kammern (20, 22) durch die Druckgasquelle (16) so befüllbar sind, daß sie im befüllten Zustand unterschiedliche Innendrücke aufweisen.

## Beschreibung

Die Erfindung betrifft eine Gassack-Seitenaufprall-Schutzeinrichtung für Fahrzeuginsassen mit einer Druckgasquelle und einem aufblasbaren Gassack, wobei der Gassack eine erste, seitlich des Brustkorbs eines Insassen aufblasbare Kammer und eine zweite aufblasbare Kammer aufweist.

Gassack-Seitenaufprall-Schutzeinrichtungen dieser Art sind dafür vorgesehen, einen Fahrzeuginsassen bei einem Seitenaufprall vor dem Kontakt mit der Seitenstruktur eines Fahrzeugs oder eindringenden Fahrzeugteilen zu schützen.

Aus der deutschen Offenlegungsschrift DE 195 38 657 A1 ist eine Gassack-Seitenaufprall-Schutzeinrichtung bekannt, bei der eine erste Kammer seitlich des Brustkorbs eines Insassen und eine zweite Kammer seitlich des Kopfes eines Insassen aufgeblasen wird. Die beiden Kammern sind durch einen Ausgleichskanal miteinander verbunden, über den Gas während des Aufblasvorgangs von der ersten in die zweite Kammer gelangen kann.

Ebenfalls bekannt sind Gassack-Seitenaufprall-Schutzeinrichtungen mit einem Gassack, der sich im aufgeblasenen Zustand seitlich des Brustkorbs und des Beckens des Fahrzeuginsassen erstreckt. Im Falle eines Seitenaufpralls wird der Insasse dann durch den Gassack im Brustkorb-/Beckenbereich abgefangen.

Unterschiedliche biomechanische Eigenschaften menschlicher Körperteile, z.B. des menschlichen Brustkorbs und des menschlichen Beckens, können mit den bekannten Einrichtungen nicht oder nur eingeschränkt berücksichtigt werden. Auch eine fahrzeugspezifische Belastungsverteilung mit Schwerpunkten im Becken- oder Brustkorbbereich, beispielsweise durch eine ausgeprägt hohe oder tiefe Sitzposition im Fahrzeug oder spezielle Seitenstrukturen, kann mit den bekannten Gassack-Seitenaufprall-Schutzeinrichtungen nicht oder nur unvollkommen ausgeglichen werden.

Mit der Erfindung soll eine Gassack-Seitenaufprall-Schutzeinrichtung geschaffen werden, mit der das Verletzungsrisiko beim Seitenaufprall verringert werden kann.

Erfindungsgemäß ist hierzu eine Gassack-Seitenaufprall-Schutzeinrichtung für Fahrzeuginsassen mit einer Druckgasquelle und einem aufblasbaren Gassack vorgesehen, bei der der Gassack eine erste, seitlich des Brustkorbs eines Insassen aufblasbare Kammer und eine zweite aufblasbare Kammer aufweist, wobei die zweite Kammer seitlich des Beckens des Insassen aufblasbar ist und die Kammern durch die Druckgasquelle so befüllbar sind, daß sie im befüllten Zustand unterschiedliche Innendrücke aufweisen. Durch die Aufteilung des Gassackvolumen in eine dem Brustkorb und eine dem Becken zugeordnete Kammer sind die Voraussetzungen für eine Anpassung der Schutzeinrichtung an die unterschiedlichen biomechanischen Eigenschaften des Brustkorb- bzw. Beckenbereichs eines Fahrzeuginsassen geschaffen. Indem die Kammern so befüllt werden, daß sie im befüllten Zustand unterschiedliche Innendrücke aufweisen, kann beispielsweise der empfindlichere Brustkorbbereich durch einen gegenüber der Beckenkammer niedrigeren Innendruck in der Brustkorbkammer weicher als das Becken abgefangen werden. Darüber hinaus kann die Schutzeinrichtung auch auf eine fahrzeugspezifische Belastungsverteilung bei einem Seitenaufprall abgestimmt werden, die sich beispielsweise durch abschnittsweise unterschiedlich stabil ausgeführte und dadurch bei einem Seitenaufprall unterschiedlich weit eindringende Seitenwände des Innenraumes im Brustkorb- bzw. Beckenbereich ergeben kann. Durch diese verbesserte Anpassung an einerseits die biomechanischen Eigenschaften des Fahrzeuginsassen und andererseits die mechanischen Eigenschaften der Fahrzeug-Seitenstruktur kann das Verletzungsrisiko beim Seitenaufprall im Vergleich zu konventionellen Gassack-Seitenaufprall-Schutzeinrichtungen verringert werden.

In Weiterbildung der Erfindung ist vorgesehen, daß der Druck in der ersten Kammer im Bereich von 0,5 bar liegt und der Druck in der zweiten Kammer im Bereich von 1,5 bar liegt. Durch diese Maßnahmen weist der Gassack im Beckenbereich einen höheren Innendruck auf als im empfindlicheren Abdomen- und Brustkorbbereich, so daß trotz optimaler Schutzwirkung beim Seitenaufprall durch den hohen Druck in der Beckenkammer die Belastung für den Abdomen- und Brustkorbbereich des Insassen reduziert wird.

Die Erfindung weiterbildende Maßnahmen sehen vor, daß die Druckgasquelle einen einzigen Gasgenerator und ein den Gasgenerator wenigstens teilweise umschließendes Gehäuse aufweist und das Gehäuse wenigstens eine erste, in die erste Kammer mündende Einströmöffnung und wenigstens eine zweite, in die zweite Kammer mündende Einströmöffnung hat, wobei der freie Querschnitt der ersten bzw. zweiten Einströmöffnung auf das Volumen der ersten bzw. zweiten Kammer, die Druckgasquelle und den zu einem vorbestimmten Zeitpunkt in der ersten bzw. zweiten Kammer zu erreichenden Innendruck abgestimmt ist. Hierdurch kann eine gegenüber konventionellen Systemen verbesserte Schutzwirkung mit nur einem Gasgenerator erreicht werden, so daß der bauliche Mehraufwand gering bleibt. Die unterschiedlichen Innendrücke in den Kammern werden durch eine entsprechende Dimensionierung der Einströmöffnungen in die erste bzw. zweite Kammer erreicht, so daß die Schutzeinrichtung einfach und kostengünstig ausgeführt werden kann. Die entsprechende Dimensionierung der Einströmöffnungen ist für die Erzielung unterschiedlicher Innendrücke in den Kammern ausreichend, da unterschiedliche Innendrücke in den Kammern nur zu einem vorbestimmten Zeitpunkt im befüllten Zustand erreicht werden müssen. Während des sehr schnell erfolgenden Aufblasvorgangs der Kammern und bis zum Aufprall des Fahrzeuginsassen kann es zu keinem Ausgleich der Innendrücke in den beiden Kammern kommen. Die Abstimmung des freien Querschnitts der Einströmöffnungen auf die Druckgasquelle erfolgt insbesondere hinsichtlich des von der Druckgasquelle erzeugten Drucks. Es ist dabei ausreichend, daß die Kammern zu einem vorbestimmten Zeitpunkt einen unterschiedlichen Innendruck aufweisen, beispielsweise zu dem Zeitpunkt, zu dem der Aufprall eines Fahrzeuginsassen erwartet wird. Die Schutzeinrichtung muß damit nicht dahingehend ausgelegt werden, daß die Kammern im statischen Zustand unterschiedliche Innendrücke aufweisen; vielmehr genügt ein unterschiedlicher Innendruck in den Kammern zu dem vorbestimmten Zeitpunkt während der dynamischen Vorgänge der Gassackbefüllung und auch noch bei befülltem Gassack. Aufgrund dieser Auslegung, mit der unterschiedliche Innendrücke lediglich zu einem vorbestimmten Zeitpunkt im befüllten Zustand der Kammern erreicht werden sollen, kann auf konstruktive Maßnahmen zur Sicherstellung eines statischen Druckhaltevermögens der Kammern verzichtet und der Aufbau der Schutzeinrichtung einfach gestaltet werden.

Vorteilhafterweise weist das Gehäuse eine mit dem Gasgenerator und der ersten und zweiten Einströmöffnung in Strömungsverbindung stehende Vorkammer auf. Das Vorsehen einer Vorkammer erleichtert die Aufteilung des von dem Gasgenerator gelieferten Gasstroms auf die erste bzw. zweite Einströmöffnung und damit auf die erste bzw. zweite Kammer.

In Weiterbildung der Erfindung ist der Gassack zur Bildung der ersten und der zweiten Kammer mit einer Trennaht versehen. Eine solche Ausbildung ermöglicht eine einfache Herstellung des Gassacks. Auch verringert eine Trennaht zwischen der ersten, seitlich des Brustkorbs eines Insassen aufblasbaren Kammer und der zweiten, seitlich des Beckens des Insassen aufblasbaren Kammer das Gassackvolumen im Abdomenbereich des Insassen und entlastet damit diesen empfindlichen Bereich.

Es ist vorteilhaft, daß die Druckgasquelle und der Gassack im gefalteten Zustand in die Rückenlehne eines Fahrzeugsitzes integriert sind. Unabhängig von der Stellung der Rückenlehne bleibt die Lage der Kammern zum Insassen damit im wesentlichen gleich, und eine Veränderung der Schutzwirkung durch Verstellen des Sitzes ist ausgeschlossen.

Schließlich ist vorgesehen, daß eine Steuereinheit und mit der Steuereinheit verbundene Mittel zum Ändern des freien Querschnitts der ersten und/oder zweiten Einströmöffnung vorgesehen sind. Diese Maßnahmen erlauben eine Anpassung der Gassack-Seitenaufprall-Schutzeinrichtung hinsichtlich der Innendrücke, die in den Kammern erreicht werden, während des Betriebs eines Fahrzeugs an Parameter, die die Schutzwirkung beeinflussen können, beispielsweise das Gewicht und die Größe eines Insassen, die Umgebungstemperatur oder die Fahrgeschwindigkeit. Diese Parameter werden über Sensoren erfaßt und in der Steuereinheit ausgewertet. Die Steuereinheit ändert dann entsprechend dem Ergebnis der Auswertung den freien Querschnitt der ersten und/oder zweiten Einströmöffnung, beispielsweise über elektrisch aktivierbare Schieber oder Blenden.

Weitere Merkmale und Vorteile der Erfindung ergeben sieh aus der folgenden Beschreibung und aus der Zeichnung, auf die Bezug genommen wird. In der Zeichnung zeigen:
Figur 1 eine schematische Darstellung der erfindungsgemäßen Gassack-Seitenaufprall-Schutzeinrichtung im aktivierten Zustand; und
Figur 2 eine Teilschnittansicht der Einzelheit II der in der Figur 1 dargestellten Gassack-Seitenaufprall-Schutzeinrichtung.

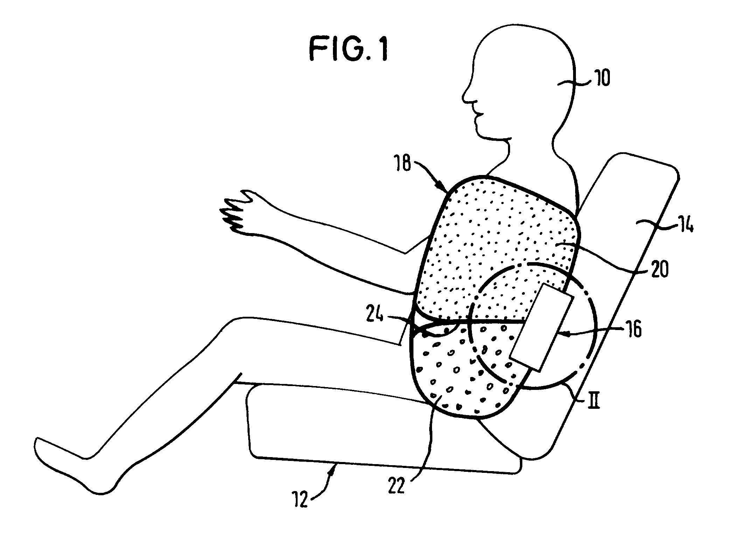

In der Figur 1 ist ein Fahrzeuginsasse 10 dargestellt, der in einem Fahrzeugsitz 12 sitzt. Der Fahrzeugsitz 12 weist eine Rückenlehne 14 auf, in die eine erfindungsgemäße Gassack-SeitenaufprallSchutzeinrichtung integriert ist. Die Gassack-Seitenaufprall-Schutzeinrichtung ist in Figur 1 im aktivierten Zustand dargestellt und weist eine Druckgasquelle 16 und einen aufblasbaren Gassack 18 auf. Der Gassack 18 hat wiederum eine erste Kammer 20, die seitlich des Brustkorbs des Insassen 10 aufgeblasen ist. Eine zweite Kammer 22 des Gassacks 18 ist seitlich des Beckens des Insassen 10 aufgeblasen. Die beiden Kammern 20, 22 weisen einen unterschiedlichen Innendruck auf, was in der Figur 1 durch eine unterschiedliche Markierung des Innenbereichs der Kammern 20, 22 angedeutet ist. Die Kammern 20 und 22 des Gassacks 18 sind dabei durch eine Trennaht 24 vollständig voneinander getrennt. Um den gegenüber dem Becken des Insassen empfindlicheren Brustkorbbereich des Insassen 10 zu schützen, beträgt der Innendruck der ersten Kammer 20 etwa 0,5 bar, wohingegen der Innendruck in der seitlich des Beckens aufgeblasenen zweiten Kammer 22 bei 1,5 bar liegt. Figur 1 stellt die Gassack-Seitenaufprall-Schutzeinrichtung zu einem Zeitpunkt dar, der kurz vor dem Aufprall des Fahrzeuginsassen 10 auf den Gassack 18 liegt. Zu diesem Zeitpunkt weisen die Kammern 20, 22 die zuvor erwähnten unterschiedlichen Innendrücke auf, so daß der Brustkorb- bzw. der Beckenbereich des Insassen 10 beim Aufprall auf die Kammer 20, 22 des Gassacks 18 unterschiedlich stark belastet werden.

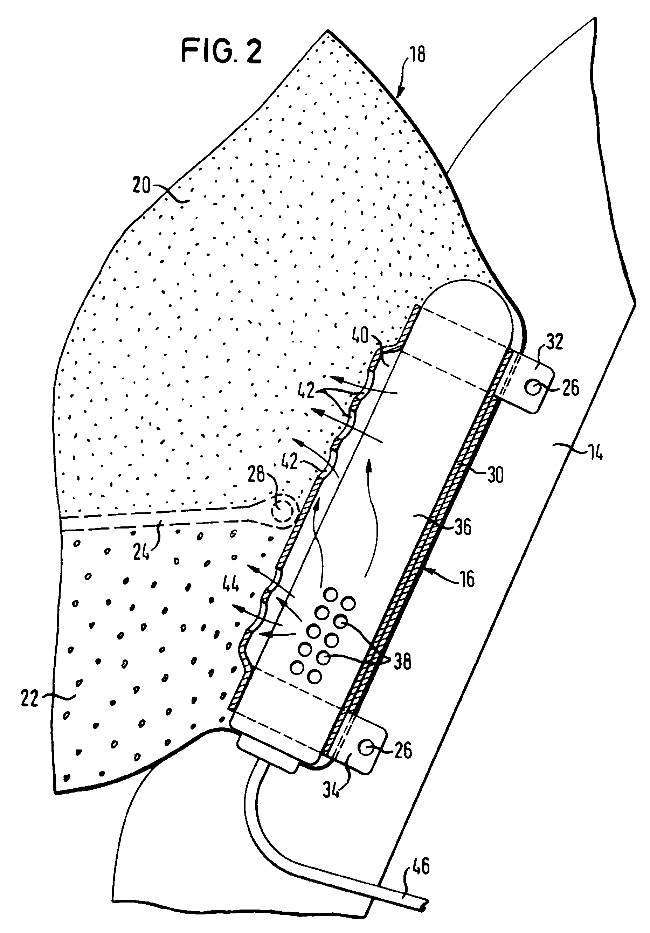

Der mit II bezeichnete Kreis umgrenzt einen Ausschnitt, der in der Figur 2 detaillierter dargestellt ist.

In der Teilschnittansicht der Figur 2 ist zunächst die Rückenlehne 14 zu erkennen, an der die Druckgasquelle 16 in konventioneller Weise an Befestigungspunkten 26 befestigt ist. Die Druckgasquelle 16 ist im wesentlichen innerhalb des Gassacks 18 angeordnet, die Befestigungspunkte 26 liegen aber außerhalb des Volumens des Gassacks 18. Ebenfalls zu erkennen ist die Kammer 20 und die Kammer 22 des Gassacks 18, die durch die Trennaht 24 vollständig voneinander getrennt sind. An dem der Druckgasquelle 16 zugewandten Ende der Trennaht 24 ist eine Verstärkung 28 angeordnet, die das Ausreißen der Trennaht 24 während des Aufblasvorgangs und während des Aufpralls verhindert und dadurch die vollständige Trennung der Kammern 20 und 22 auch im aufgeblasenen Zustand des Gassacks 18 sicherstellt.

Die Druckgasquelle 16 weist ein rohrförmiges Gehäuse 30 auf, das an seinem oberen und unteren Ende jeweils in Form einer Rohrschelle 32 bzw. 34 ausgebildet ist. Die Rohrschellen 32 und 34 erstrecken sich durch die Wandung des Gassacks 18 hindurch zu dem jeweiligen Befestigungspunkt 26 an der Rückenlehne 14. Das rohrförmige Gehäuse 30 umschließt einen zylindrischen Gasgenerator 36 in dessen mittleren Abschnitt, der in dem Gehäuse durch die Rohrschellen 32 und 34 festgelegt ist. Durch die Rohrschellen 32 und 34 ist der Gasgenerator 36 auch in dem Gehäuse 30 gegen die Umgebung abgedichtet. Der Gasgenerator 36 weist auf seinem im Gehäuse 30 liegenden mittleren Abschnitt Ausströmöffnungen 38 auf, über die von ihm nach seiner Aktivierung geliefertes Gas in das Gehäuse 30 strömen kann.

Das Gehäuse 30 bildet dabei zwischen seiner Innenwandung und der Außenwandung des mittleren Abschnitts des Gasgenerators 36, der sich zwischen den Rohrschellen 32 und 34 erstreckt, eine Vorkammer 40, über die aus den Ausströmöffnungen 38 des Gasgenerators 36 ausströmendes Gas zu ersten Einströmöffnungen 42 und zweiten Einströmöffnungen 44 in der Wandung des Gehäuses 30 gelangen kann. Die ersten Einströmöffnungen 42 münden in die erste Kammer 20 des Gassacks 18, und die zweiten Einströmöffnungen 44 münden in die zweite Kammer 22 des Gassacks 18. Während die Einströmöffnung 42 aus drei einzelnen kreisförmigen Durchgängen durch die Außenwandung des Gehäuses 30 besteht, ist die Einströmöffnung 44 durch nur zwei kreisförmige Durchgänge gebildet. Der für eine Strömung zur Verfügung stehende freie Querschnitt der ersten Einströmöffnung 42 bzw. der zweiten Einströmöffnung 44 ergibt sich damit aus der Summe der freien Einzelquerschnitte der kreisförmigen Durchgänge. Der freie Querschnitt der ersten Einströmöffnung 42 ist dabei auf das Volumen der ersten Kammer 20, den vom Gasgenerator 36 erzeugten Druck und den Zeitpunkt abgestimmt, zu dem in der ersten Kammer 20 ein Innendruck von 0,5 bar erreicht werden soll. Bei der beschriebenen Ausführungsform liegt der vorbestimmte Zeitpunkt kurz vor dem Aufprall des Fahrzeuginsassen auf den Gassack 18. In analoger Weise ist der freie Querschnitt der zweiten Einströmöffnung 44 auf das Volumen der zweiten Kammer 22, den vom Gasgenerator 36 erzeugten Druck und den kurz vor dem Aufprall des Insassen zu erreichenden Innendruck von 1,5 bar abgestimmt.

Die Aktivierung des Gasgenerators 36 erfolgt über die Zuleitungen 46, die mit einer nicht dargestellten, konventionellen Einrichtung zur Aufprallerkennung verbunden sind.

Nach Aktivierung des Gasgenerators 36 strömt von diesem erzeugtes Gas aus den Ausströmöffnungen 38 in die Vorkammer 40 und durch die Einströmöffnungen 42 bzw. 44 in die Kammern 20 bzw. 22. In der Vorkammer 40 entsteht infolgedessen ein Überdruck, und die in die Kammern 20, 22 abströmende Gasmenge ist im wesentlichen durch den Druck in der Vorkammer 40 und den freien Querschnitt der jeweils zugeordneten Einströmöffnungen 42, 44 bestimmt. Um in der Kammer 22 einen höheren Innendruck als in der Kammer 20 zu erreichen, ist der freie Querschnitt der Einströmöffnung 44 daher größer als der freie Querschnitt, der erforderlich wäre, um die Kammer 22 gleich schnell und mit dem gleichen Innendruck wie die Kammer 20 zu füllen. Infolgedessen wird die Kammer 22 schneller befüllt als die Kammer 20, und der Innendruck der Kammer 22 steigt schneller an als der Druck in der Kammer 20. Es ist daher möglich, zu einem Zeitpunkt kurz vor dem Aufprall eines Fahrzeuginsassen auf den Gassack 18 unterschiedliche Innendrücke in den Kammern 20 und 22 zu erreichen. Eventuelle Druckausgleichvorgänge zwischen den Kammern 20 und 22 über die Einströmöffnungen 42 und 44 und die Vorkammer 40 treten dabei erst später auf und können sich auf die Erzielung unterschiedlicher Innendrücke in den Kammern kurz vor dem Aufprall eines Fahrzeuginsassen nicht oder nur unwesentlich auswirken.

## Patentansprüche

1. Gassack-Seitenaufprall-Schutzeinrichtung für Fahrzeuginsassen, mit einer Druckgasquelle (16) und einem aufblasbaren Gassack (18), wobei der Gassack (18) eine erste, seitlich des Brustkorbs eines Insassen aufblasbare Kammer (20) und eine zweite aufblasbare Kammer (22) aufweist, dadurch gekennzeichnet, daß die zweite Kammer (22) seitlich des Beckens des Insassen aufblasbar ist und die Kammern (20, 22) durch die Druckgasquelle (16) so befüllbar sind, daß sie im befüllten Zustand unterschiedliche Innendrücke aufweisen.

2. Gassack-Seitenaufprall-Schutzeinrichtung nach Anspruch 1, dadurch gekennzeichnet, daß der Druck in der ersten Kammer (20) im Bereich von 0,5 bar liegt und der Druck in der zweiten Kammer (22) im Bereich von 1,5 bar liegt.

3. Gassack-Seitenaufprall-Schutzeinrichtung nach Anspruch 1 oder 2, dadurch gekennzeichnet, daß die Druckgasquelle (16) einen einzigen Gasgenerator (36) und ein den Gasgenerator (36) wenigstens teilweise umschließendes Gehäuse (30) aufweist und das Gehäuse (30) wenigstens eine erste, in die erste Kammer (20) mündende Einströmöffnung (42) und wenigstens eine zweite, in die zweite Kammer (22) mündende Einströmöffnung (44) hat, wobei der freie Querschnitt der ersten bzw. zweiten Einströmöffnung (42, 44) auf das Volumen der ersten bzw. zweiten Kammer (20, 22), die Druckgasquelle (16) und den zu einem vorbestimmten Zeitpunkt in der ersten bzw. zweiten Kammer (20, 22) zu erreichenden Innendruck abgestimmt ist.

4. Gassack-Seitenaufprall-Schutzeinrichtung nach Anspruch 3, dadurch gekennzeichnet, daß das Gehäuse (30) eine mit dem Gasgenerator (36) und der ersten und zweiten Einströmöffnung (42, 44) in Strömungsverbindung stehende Vorkammer (40) aufweist.

5. Gassack-Seitenaufprall-Schutzeinrichtung nach einem der vorstehenden Ansprüche, dadurch gekennzeichnet, daß der Gassack (18) zur Bildung der ersten und der zweiten Kammer (20, 22) mit einer Trennaht (24) versehen ist.

6. Gassack-Seitenaufprall-Schutzeinrichtung nach einem der vorstehenden Ansprüche, dadurch gekennzeichnet, daß die Druckgasquelle (16) und der Gassack (18) im gefalteten Zustand in die Rückenlehne (14) eines Fahrzeugsitzes (12) integriert sind.

7. Gassack-Seitenaufprall-Schutzeinrichtung nach einem der vorstehenden Ansprüche, dadurch gekennzeichnet, daß eine Steuereinheit und mit der Steuereinheit verbundene Mittel zum Ändern des freien Querschnitts der ersten und/oder zweiten Einströmöffnung vorgesehen sind.
